(19) Europäisches Patentamt
European Patent Office
Office européen des brevets

(11) **EP 2 890 596 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**18.03.2020   Patentblatt 2020/12**

(45) Hinweis auf die Patenterteilung:
**12.10.2016   Patentblatt 2016/41**

(21) Anmeldenummer: **13782676.4**

(22) Anmeldetag: **17.10.2013**

(51) Int Cl.:
**B60T 13/66** (2006.01)    **B60T 8/00** (2006.01)
**B60T 17/22** (2006.01)    **B60T 8/52** (2006.01)

(86) Internationale Anmeldenummer:
**PCT/EP2013/071701**

(87) Internationale Veröffentlichungsnummer:
**WO 2014/067786 (08.05.2014 Gazette 2014/19)**

(54) **BREMSAKTOR FÜR EIN BREMSSYSTEM EINES FAHRZEUGS, INSBESONDERE EINES SCHIENENFAHRZEUGS**

BRAKE ACTUATOR FOR A BRAKE SYSTEM OF A VEHICLE, IN PARTICULAR OF A RAIL VEHICLE

ACTIONNEUR DE FREIN POUR SYSTÈME DE FREINAGE D'UN VÉHICULE, NOTAMMENT D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2012   DE 102012219984**

(43) Veröffentlichungstag der Anmeldung:
**08.07.2015   Patentblatt 2015/28**

(73) Patentinhaber: **Siemens Mobility GmbH
81739 München (DE)**

(72) Erfinder:
• **JENNEK, Steffen
82061 Neuried (DE)**
• **SCHIFFERS, Toni
41812 Erkelenz (DE)**

(56) Entgegenhaltungen:
EP-A1- 0 600 481       EP-A1- 1 347 910
EP-A2- 0 276 435       EP-A2- 0 703 118
WO-A2-2012/126946      WO-A2-2012/126946
DE-A1- 2 926 017       DE-A1- 10 132 834
DE-A1- 19 526 659      DE-A1- 19 536 694
DE-A1-102004 041 672   DE-A1-102009 042 965

**Beschreibung**

Die Erfindung betrifft einen Bremsaktor für ein Bremssystem eines Fahrzeugs, insbesondere eines Schienenfahrzeugs, mit einer Sollwertregelungseinrichtung, die zumindest einen Sollwert einer Verzögerungsgröße auf einen Ausgangs-Sollwert regelt, mit einer Sollwert-Kraft-Umsetzungseinrichtung, die den Ausgangs-Sollwert in einen Istwert einer Anpressgröße umsetzt, und mit Bremsmitteln, die den Istwert der Anpressgröße entspricht.zum Abbremsen des Fahrzeugs in einen Istwert der Verzögerungsgröße umsetzen, bei dem ein Sensor, den Istwert der Anpressgröße ermittelt, bei dem ein weiterer Sensor, den Istwert der Verzögerungsgröße ermittelt und bei dem die Sollwertregelungseinrichtung geeignet ausgebildet ist, bei vorbestimmten Betriebsbedingungen des Fahrzeugs zur Regelung der Verzögerungsgröße den Ausgangs-Sollwert so einzustellen, dass der erfasste Istwert der Verzögerungsgröße dem zumindest einen Sollwert der Verzögerungsgröße

Ein derartiger Bremsaktor ist in der Druckschrift WO 2012/126946 A2 beschrieben. Weitere Bremsaktoren sind aus den Druckschriften DE 101 32 834 A1 und EP 0 276 435 A2 bekannt.

Der Erfindung liegt die Aufgabe zu Grunde, die Regelbarkeit eines derartigen Bremsaktors zu verbessern.

Gelöst wird diese Aufgabe durch einen Bremsaktor mit den Merkmalen des Patentanspruches 1, bei dem die Sollwertregelungseinrichtung geeignet ausgebildet ist, bei weiteren vorbestimmten Betriebsbedingungen des Fahrzeugs zur Regelung der Anpressgröße den Ausgangs-Sollwert so einzustellen, dass der erfasste Istwert der Anpressgröße einem Sollwert der Anpressgröße entspricht.

Mit dem erfindungsgemäßen Bremsaktor können in vorteilhafter Weise Bremsvorgänge bei den weiteren Betriebsbedingungen, bei denen beispielsweise die Regelung der Verzögerungsgröße nicht sinnvoll ist oder zu Problemen führen könnte, sicher geregelt werden.

Als vorteilhaft wird eine Überwachungseinrichtung angesehen, die geeignet ausgebildet ist, bei den vorbestimmten Betriebsbedingungen einen ersten Wert eines Umschaltsignals und bei den weiteren Betriebsbedingungen einen zweiten Wert des Umschaltsignals zu erzeugen, wobei die Sollwertregelungseinrichtung geeignet ausgebildet ist, unter der Einwirkung des ersten Wertes des Umschaltsignals selbsttätig zur Regelung der Verzögerungsgröße und unter der Einwirkung des zweiten Wertes des Umschaltsignals selbsttätig zur Regelung der Anpressgröße umzuschalten.

Vorzugsweise dient als Anpressgröße ein Anpressdruck oder eine Anpresskraft und als Verzögerungsgröße eine Verzögerungskraft oder ein Verzögerungsmoment.

Es wird außerdem als vorteilhaft angesehen, wenn der Sollwert der Anpressgröße unabhängig von dem Sollwert der Verzögerungsgröße vorgegeben oder anhand des Sollwertes der Verzögerungsgröße berechnet ist.

Als vorteilhaft wird auch eine Umrechnungseinrichtung angesehen, die geeignet ausgebildet ist, anhand geometrischer Verhältnisse der Sollwert-Kraft-Umsetzungseinrichtung und der Bremsmittel sowie anhand der beiden Istwerte einen Reibwert zu berechnen, einen nominalen Reibwert anzufordern oder zu hinterlegen und den Sollwert der Anpressgröße zu berechnen, wobei die Berechnung des Sollwert der Anpressgröße anhand des Sollwertes der Verzögerungsgröße sowie anhand eines ausgewählten Reibwertes nach folgendem Zusammenhang erfolgt:

$$Sp = Sv \ / \ mue.i$$

mit mue.i = mue.nom wenn mue.nom < mue.ber
sonst mue.i = mue.ber.

Dabei kann der berechnete Reibwert ein Momentanreibwert oder ein mittlerer Reibwert des aktuellen Bremsvorganges oder ein mittlerer Reibwert eines vorhergehenden Bremsvorganges sein.

Vorzugsweise ist die Überwachungseinrichtung geeignet ausgebildet, den zweiten Wert des Umschaltsignals bei einem Stillstand des Fahrzeuges und/oder beim Gleiten des Fahrzeuges und/oder bei Unplausibilität des ausgewählten Reibwertes an einem Ausgang bereit zu stellen, da zumindest bei diesen Betriebsbedingungen bei der Regelung der Verzögerungsgröße Probleme auftreten könnten.

Die Erfindung betrifft auch ein Bremssystem zum Bremsen eines Fahrzeugs, insbesondere eines Schienenfahrzeugs mit zumindest einen erfindungsgemäßen Bremsaktor nach einem der Ansprüche 1 bis 7, der vorzugsweise in seiner Gesamtheit zur Montage an einem Drehgestell des Schienenfahrzeugs eingerichtet ist.

Außerdem betrifft die Erfindung ein Fahrzeug, insbesondere ein Schienenfahrzeug mit einem derartigen Bremssystem.

Zur weiteren Erläuterung der Erfindung sind in der

Figur 1     ein erfindungsgemäßes Schienenfahrzeug mit einem erfindungsgemäßen Bremssystem, bei dem Radsätzen von Drehgestellen jeweils zumindest ein erfindungsgemäßer Bremsaktor zugeordnet ist, und in der

Figur 2     einer der erfindungsgemäßen Bremsaktoren gezeigt.

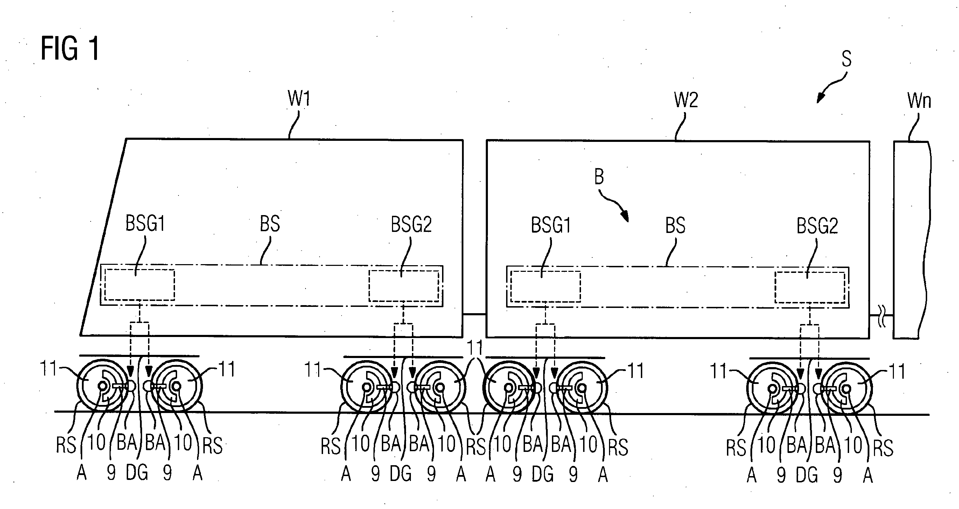

Gemäß Figur 1 verfügt das Schienenfahrzeug S über Wagen W1, W2, ..., Wn, deren Wagenkästen in hier nicht gezeigter Weise jeweils über eine Sekundärfederung von zwei Drehgestellen DG getragen sind. Die Drehgestelle DG weisen jeweils zwei Radsätze RS auf. Die Radsätze weisen jeweils eine Achse A auf, an deren Enden Räder drehfest gehalten sind. Dabei sind die Achsen A der Radsätze RS in hier nicht gezeigter Weise in Radsatzlagern drehbar gelagert, die über eine Primärfederung an einem Drehgestellrahmen des jeweiligen Drehgestells DG gehalten sind. Weiterhin verfügt das Schienenfahrzeug über ein hier als ganzes mit B bezeichnetes Bremssystem.

Jede Achse A des Schienenfahrzeuges S ist jeweils mit mindestens einer Bremsbetätigungsanordnung ausgerüstet, die im Weiteren als Bremsaktor BA bezeichnet ist. Somit verfügt jeder der Wagen W1, W2, ..., Wn über mindestens vier dieser Bremsaktoren BA.

Jeder der Wagen W1, W2, ..., Wn weist eine Bremssteuerung BS auf, die von zwei Bremssteuergeräten BSG1 und BSG2 gebildet ist. Dabei sind die Bremssteuergeräte BSG1 und BSG2 in hier nicht gezeigter Weise über einen Zugbus von einer zentralen Fahrzeugsteuerung ansteuerbar.

Über die Bremssteuerung BS erhalten die Bremsaktoren BA oder Gruppen der Bremsaktoren jeweils einen Bremsbefehl. Dabei können die Bremsbefehle über eine oder mehrere Steuerleitungen und/oder BUS und/oder über Funk an die Bremsaktoren BA übertragen werden.

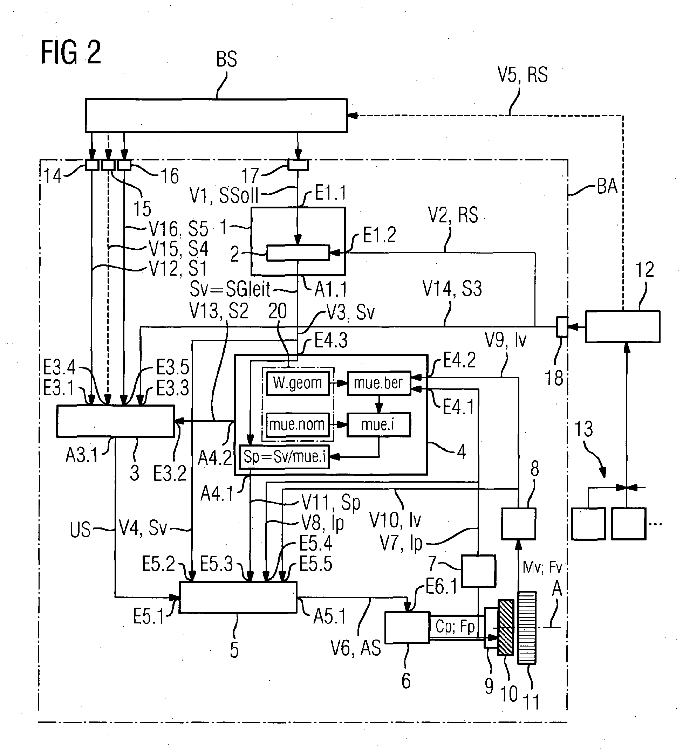

Die Figur 2 zeigt einen der Bremsaktoren BA im Detail. Der Bremsaktor BA weist eine Sollwerterfassungseinheit 1 auf, die mit zumindest einer Sollwertkorrektureinrichtung 2 versehen ist.

Außerdem weist der Bremsaktor BA eine Überwachungseinrichtung 3, eine Umrechnungseinrichtung 4, eine Sollwertregelungseinrichtung 5 und eine Sollwert-Kraft-Umsetzungseinrichtung 6 auf. Ferner weist der Bremsaktor BA Sensoren 7, 8 und Bremsmittel 9, 10, 11 auf. Dem Bremsaktor BA ist eine Gleitschutzregelungseinrichtung 12 zugeordnet. Die Gleitschutzregelungseinrichtung 12 erfasst über Raddrehzahlsensoren 13 die Drehzahl der Räder der jeweiligen Achse A und erzeugt ein Reduziersignal RS zur Begrenzung des maximalen Radschlupfes der Räder. Das von der Gleitschutzregelungseinrichtung 12 gebildete Reduziersignal RS kann über eine oder mehrere Steuerleitungen und/oder über einen Bus und/oder über Funk zum Bremsaktor BA und optional zur Bremssteuerung BS übertragen werden.

Die Figur 2 zeigt Schnittstellen 14 bis 18 des Bremsaktors BA. Es muss aber ergänzend erwähnt werden, dass zur besseren Übersicht nicht alle Schnittstellen des Bremsaktors BA dargestellt sind. Nicht gezeigt sind insbesondere eine Schnittstelle zu einer Spannungsversorgung des Bremsaktors BA und eine Schnittstelle zu einer Bremse-gelöst-Schleife. Gezeigt ist auch nicht eine drähtige Verbindung zum elektrischen Notlösen des Bremsaktors BA.

Im Folgenden ist die Wirkungsweise des erfindungsgemäßen Bremsaktors BA beschrieben.

In Abhängigkeit des Bremsbefehls fordert die Sollwerterfassungseinheit 1 über eine Verbindung V1 von der Bremssteuerung BS einen Bremssollwert SSoll einer Verzögerungsgröße an.

Der Bremssollwert SSoll der Verzögerungsgröße, den der Bremsaktor BA von der Bremssteuerung BS erhält, entspricht im Betriebsbremsfall einem Betriebsbremssollwert und im Schnellbremsfall einem Schnellbremssollwert.

Den von der Sollwerterfassungseinheit 1 an einem Eingang E1.1 erfassten Bremssollwert SSoll der Verzögerungsgröße korrigiert die Sollwertkorrektureinrichtung 2 in Abhängigkeit des über eine Verbindung V2 an einem zweiten Eingang E1.2 der Sollwerterfassungseinheit 1 bereitgestellten Reduziersignals RS auf einen gleitschutzkorrigierten Bremssollwert SGleit der Verzögerungsgröße. Mittels der Sollwertkorrektureinrichtung 2 erfolgt also eine Gleitschutzkorrektur des Bremssollwertes SSoll der Verzögerungsgröße.

Der gleitschutzkorrigierte Bremssollwert SGleit der Verzögerungsgröße wird von der Sollwerterfassungseinheit 1 als Sollwert Sv (Sv = SGleit) an einem Ausgang A1.1 bereitgestellt und über eine Verbindung V3 an einen Eingang E4.3 der Umrechnungseinrichtung 4 sowie über eine Verbindung V4 an einen Eingang E5.2 der Sollwertregelungseinrichtung 5 übermittelt.

Der gleitschutzkorrigierte Sollwert Sv = SGleit der Verzögerungsgröße kann aber optional anhand des Bremssollwertes SSoll und des Reduziersignals RS auch von der Bremssteuerung BS selbst ermittelt werden, so dass die Sollwerterfassungseinheit 1 von der Bremssteuerung BS bereits den gleitschutzkorrigierte Sollwert Sv = SGleit anfordert, der dann wiederum am Ausgang A1.1 bereitgestellt ist. Diese optionale Ausführungsform, bei der das Reduziersignal RS über eine Verbindung V5 an die Bremssteuerung BS übermittelt wird, um dort den gleitschutzkorrigierte Sollwert Sv = SGleit der Verzögerungsgröße zu bestimmen, ist in der Figur 2 mit gestrichelter Linie dargestellt.

Der am Ausgang A1.1 bereitgestellte Sollwert Sv der zu regelnden Verzögerungsgröße ist außerdem in hier nicht weiter dargestellter Weise bereits lastkorrigiert, berücksichtigt bereits eine Hoch-/ Niedrigabbremsung und berücksichtigt ein sogenanntes GB-wirkt-Signal, welches das Wirken einer generatorischen Bremse signalisiert.

Wenn die Gleitschutzkorrektur und/oder die Lastkorrektur und/oder die Berücksichtigung der Hoch-/ Niedrigabbremsung und/oder die Berücksichtigung des GB-wirkt-Signals bereits in der Bremssteuerung BS vorgenommen werden, dann können diese in der Sollwertkorrektureinrichtung einer Plausibilisierung unterzogen werden.

Bei vorbestimmten ersten Betriebsbedingungen regelt die Sollwertregelungseinrichtung 5 den am Eingang E5.2 bereitgestellten Sollwert Sv der Verzögerungsgröße auf einen Ausgangs-Sollwert AS und stellt ihn über eine Verbindung V6 an einem Eingang E6.1 der Sollwert-Kraft-Umsetzungseinrichtung 6 bereit. Die Sollwert-Kraft-Umsetzungseinrichtung 6 setzt den an ihrem Eingang E6.1 anliegenden Ausgangs-Sollwert AS in einen Istwert Ip einer Anpressgröße um. Die Bremsmittel, die hier von einer als Ganzes mit 9 bezeichneten, von der Sollwert-Kraft-Umsetzungseinrichtung 6 beaufschlagten Hebelmechanik mit Anpresshalter, einem als Bremsbelag 10 ausgebildeten Anpressteil und einer Bremsscheibe 11 gebildet sind, setzen den Istwert Ip der Anpressgröße zum Abbremsen des Schienenfahrzeugs S in einen Istwert Iv der Verzögerungsgröße um. Ein Sensor 7 ermittelt den Istwert Ip der Anpressgröße und stellt diesen Istwert Ip über eine Verbindung V7 an einem Eingang E4.1 der Umrechnungseinrichtung 4 und über eine Verbindung V8 an einem Eingang E5.4 der Sollwertregelungseinrichtung 5 bereit. Ein weiterer Sensor 8 ermittelt den Istwert Iv der Verzögerungsgröße und stellt diesen Istwert Iv über eine Verbindung V9 an einem Eingang E4.2 der Umrechnungseinrichtung 4 und über eine Verbindung V10 an einem Eingang E5.5 der Sollwertregelungseinrichtung 5 bereit.

Die die Anpressgröße erzeugende Sollwert-Kraft-Umsetzungseinrichtung 6 kann insbesondere eine pneumatische, eine mechanische, eine elektrische oder eine hydraulische Einrichtung sein. Sie kann auch als eine Kombination dieser Einrichtungen ausgeführt sein. Somit kann als Anpressgröße beispielsweise ein Anpressdruck Cp in einem hier nicht gezeigten Bremszylinder einer als elektropneumatische Einrichtung ausgebildeten Sollwert-Kraft-Umsetzungseinrichtung 6 oder eine Anpresskraft Fp eines Stößels des Bremszylinders dienen kann. Im gezeigten Ausführungsbeispiel dient die Anpresskraft Fp des Bremszylinders als die zu regelnde Anpressgröße.

Über einen momentan wirkenden Reibwert (Momentanreibwert) zwischen Bremsbelag 10 und Bremsscheibe 11 wird bei drehender Bremsscheibe 11 ein auf die Bremsscheibe wirkendes Verzögerungsmoment Mv bzw. eine auf die Bremsscheibe wirkende Verzögerungskraft Fv erzeugt.

Als Verzögerungsgröße kann daher beispielsweise die auf die Bremsscheibe 11 wirkende Verzögerungskraft Fv oder der auf die Bremsscheibe wirkendes Verzögerungsmoment Mv dienen. Im gezeigten Ausführungsbeispiel dient die Verzögerungskraft Fv als die zu regelnde Verzögerungsgröße.

Über die bekannten geometrischen Verhältnisse erfolgt über die Regelung der Verzögerungskraft Fv (bzw. alternativ des Verzögerungsmomentes Mv) an der Bremsscheibe auch direkt die Regelung der Verzögerungskraft am Rad.

Die Sollwertregelungseinrichtung 5 ist geeignet ausgebildet, bei den vorbestimmten ersten Betriebsbedingungen des Fahrzeugs zur Regelung der Verzögerungsgröße den Ausgangs-Sollwert AS so einzustellen, dass der erfasste Istwert Iv der Verzögerungsgröße Fv (bzw. alternativ Mv) dem zumindest einen Sollwert Sv der Verzögerungsgröße Fv (bzw. alternativ Mv) entspricht.

Die Umrechnungseinrichtung 4 ist geeignet ausgebildet, anhand angeforderter oder - wie hier gezeigt - in einem Speicher 20 hinterlegter und hier als Ganzes mit W.geom bezeichneter Werte geometrischer Verhältnisse der Sollwert-Kraft-Umsetzungseinrichtung 6 und der Bremsmittel 9, 10, 11 sowie anhand der beiden Istwerte Ip, Iv einen Reibwert mue.ber zu berechnen.

Die Umrechnungseinrichtung 4 ist außerdem geeignet ausgebildet, einen nominalen Reibwert mue.nom beispielsweise von der Bremssteuerung BS anzufordern oder - wie hier gezeigt - in dem Speicher 20 zu hinterlegen und den Sollwert Sp der Anpressgröße Fp (bzw. alternativ Cp) zu berechnen.

Die Berechnung des Sollwert Sp der Anpressgröße Fp (bzw. alternativ Cp) erfolgt dabei anhand des Sollwertes Sv der Verzögerungsgröße Fv (bzw. alternativ Mv) sowie anhand eines ausgewählten Reibwertes mue.i nach folgendem Zusammenhang:

$$Sp = Sv / mue.i$$

mit mue.i = mue.nom wenn mue.nom < mue.ber
sonst mue.i = mue.ber.

Dabei ist der berechnete Reibwert mue.ber der Momentanreibwert zwischen dem Bremsbelag 10 und der Bremsscheibe 11 oder ein mittlerer Reibwert des aktuellen Bremsvorganges oder ein mittlerer Reibwert eines vorhergehenden Bremsvorganges.

Der nominale Reibwert mue.nom ist - wie bereits aus der Druckschrift WO 2012/126946 A2 bekannt - ein Auslegungsreibwert entsprechend dem heute üblichen Reibwert der verbreiteten Druckluftreibungsbremsen mit Druckregelung im Vollbahnbereich.

Der von der Umrechnungseinrichtung 4 berechnete Sollwert Sp der Anpressgröße Fp (bzw. alternativ Cp) wird von der Umrechnungseinrichtung 4 an einem Ausgang A4.1 bereit gestellt und über eine Verbindung V11 an einen Eingang E5.3 der Sollwertregelungseinrichtung 5 übermittelt.

Die Sollwertregelungseinrichtung 5 ist geeignet ausgebildet, bei weiteren vorbestimmten Betriebsbedingungen des Fahrzeugs zur Regelung der Anpressgröße Fp (bzw. alternativ Cp) den Ausgangs-Sollwert AS so einzustellen, dass der erfasste Istwert Ip der Anpressgröße Fp (bzw. alternativ Cp) dem Sollwert Sp der Anpressgröße Fp (bzw. alternativ Cp) entspricht.

Die Überwachungseinrichtung 3 weist Eingänge E3.1, E3.2 und E3.3 bzw. E3.4 auf. Über Verbindungen V12, V13 und V14 bzw. V15 empfängt die Überwachungseinrichtung von der Bremssteuerung, der Umrechnungseinrichtung und der Gleitschutzeinrichtung an den Eingänge E3.1, E3.2 und E3.3 bzw. E3.4 Signale S1, S2 und S3 bzw. S4, deren Werte in zumindest einer ersten Kombination die ersten Betriebsbedingungen charakterisieren, bei denen eine Regelung der Verzögerungsgröße Fv (bzw. alternativ Mv) erfolgt und deren Werte in zumindest einer weiteren Kombination die weiteren Betriebsbedingungen des Fahrzeugs charakterisieren, bei denen eine Regelung der Anpressgröße Fp (bzw. alternativ Cp) erfolgt.

So empfängt die Überwachungseinrichtung 3 von der Bremssteuerung BS an einem ersten Eingang E3.1 ein erstes Signal S1, wobei sich das Schienenfahrzeug S bei einem ersten Wert S1.1 des ersten Signals S1 in Bewegung und bei einem zweiten Wert S1.2 im Stillstand befindet.

Weiterhin empfängt die Überwachungseinrichtung 3 von der Umrechnungseinrichtung 4 an einem zweiten Eingang E3.2 ein zweites Signal S2. Bei einem ersten Wert S2.1 ist der ausgewählte Reibwert mue.i plausibel und bei einem zweiten Wert S2.2 ist der ausgewählte Reibwert mue.i nicht plausibel.

Ferner empfängt die Überwachungseinrichtung 3 von der Gleitschutzeinrichtung 12 an einem dritten Eingang E3.3 ein drittes Signal S3. Bei einem ersten Wert S3.1 ist der Gleitschutz der Gleitschutzeinrichtung 12 nicht aktiv und bei einem zweiten Wert S3.2 ist der Gleitschutz aktiv.

Alternativ kann die Überwachungseinrichtung 3 anstelle des dritten Eingangs E3.3 einen vierten Eingang E3.4 aufweisen, an dem sie von der Bremssteuerung BS ein viertes Signal S4 empfängt, wobei bei einem ersten Wert S4.1 der Gleitschutz der Gleitschutzeinrichtung 12 nicht aktiv und bei einem zweiten Wert S4.2 aktiv ist.

Außerdem empfängt die Überwachungseinrichtung von der Bremssteuerung BS an einem fünften Eingang E3.5 ein fünftes Signal S5. Bei einem ersten Wert S5.1 ist keine Schnellbremsung aktiv und bei einem zweiten Wert S5.2 ist eine Schnellbremsung aktiv.

Die Überwachungseinrichtung 3 ist geeignet ausgebildet, bei den vorbestimmten ersten Betriebsbedingungen einen ersten Wert US.1 eines Umschaltsignals US und bei den weiteren Betriebsbedingungen einen zweiten Wert US.2 des Umschaltsignals US zu erzeugen und über die Verbindung V12 an die Sollwertregelungseinrichtung 5 zu übermitteln.

Die Sollwertregelungseinrichtung 5 ist geeignet ausgebildet, unter der Einwirkung des ersten Wertes US.1 des Umschaltsignals US selbsttätig zur Regelung der Verzögerungsgröße Fv (bzw. alternativ Mv) und unter der Einwirkung des zweiten Wertes US.2 des Umschaltsignals US selbsttätig zur Regelung der Anpressgröße Fp (bzw. alternativ Cp) umzuschalten.

Bei dem gezeigten Ausführungsbeispiel erfolgt eine Regelung der Verzögerungsgröße Fv (bzw. alternativ Mv) dann, wenn das erste Signale S1 den Wert S1.1 UND das zweite Signal S2 den Wert S2.1 UND das dritte Signal S3 den Wert S3.1 bzw. alternativ das vierte Signal S4 den Wert S4.1 hat. Die Überwachungseinrichtung 3 ist also geeignet ausgebildet, den ersten Wert US.1 des Umschaltsignals US bei den folgenden ersten Betriebsbedingungen an dem Ausgang A3.1 bereit zu stellen: wenn sich das Schienenfahrzeug bewegt UND dabei der ausgewählte Reibwert mue.i plausibel ist UND dabei das Schienenfahrzeug S nicht gleitet (also wenn der Gleitschutz der Gleitschutzeinrichtung 12 inaktiv ist).

Eine Regelung der Anpressgröße Fp (bzw. alternativ Cp) erfolgt hingegen dann, wenn das erste Signal S1 den Wert S1.2 ODER wenn das zweite Signal S2 den Wert S2.2 ODER wenn das dritte Signal S3 den Wert S3.2 bzw. alternativ das vierte Signal S4 den Wert S4.2 hat. Die Überwachungseinrichtung 3 ist also geeignet ausgebildet, den zweiten Wert US.2 des Umschaltsignals US bei den folgenden weiteren Betriebsbedingungen an dem Ausgang A3.1 bereit zu stellen: bei einem Stillstand des Fahrzeuges und/oder bei einer Unplausibilität des ausgewählten Reibwertes mue.i und/oder beim Gleiten des Fahrzeuges (also wenn der Gleitschutz der Gleitschutzeinrichtung 12 inaktiv ist).

Mit den Messwerten Iv und Ip kann die Umrechnungseinrichtung 4 also den Reibwert mue.ber berechnen und über vorgegebene Grenzen mit dem nominalen Reibwert mue.nom plausibilisieren, um den aktuellen Reibwert mue.i zwischen Belag und Scheibe auszuwählen. Immer mit dem zuletzt gültigen bzw. plausiblen ausgewählten Reibwert mue.i wird der Sollwert Sp der Anpressgröße Fp (bzw. alternativ Cp) berechnet und am Ausgang A4.1 zur Verfügung gestellt. Bei einer erkannten Unplausibilität von mue.i setzt die Umrechnungseinrichtung 4 am Ausgang A4.2 das Signal S3 auf den Wert S3.2.

Erfindungsgemäß wird also Folgendes vorgeschlagen:

Unter den bestimmten ersten Betriebsbedingungen erfolgt eine Regelung der Verzögerungsgröße Fv (bzw. alternativ Mv). Unter den bestimmten weiteren Betriebsbedingungen wird aber im Bremsaktor selbsttätig von der Regelung der Verzögerungsgröße auf die Regelung der Anpressgröße Fp (bzw. alternativ Cp) umgeschaltet, wobei der Sollwert Sp der Anpressgröße Fp (bzw. alternativ Cp) unabhängig von dem Sollwert Sv der Verzögerungsgröße Fv (bzw. alternativ Mv) von der Bremssteuerung BS vorgegeben sein kann oder - wie hier dargestellt anhand des Sollwertes Sv der Verzögerungsgröße berechnet ist.

Zur Berechnung des Sollwertes Sp der Anpressgröße Fp bedarf es einer Beziehung zwischen den Größen Verzögerungskraft und Anpresskraft. Der erfindungsgemäße Bremsaktor hat gegenüber dem Stand der Technik heutiger verbreiteter pneumatischer Bremssysteme den Vorteil, dass der Reibwert mue.ber während eines ungestörten dynamischen Bremsvorganges aus den Messgrößen Anpresskraft oder -Druck, sowie Verzögerungskraft oder - Moment sowie über die bekannten geometrischen Verhältnisse kontinuierlich berechnet wird.

Bei dem erfindungsgemäßen Bremsaktor ist insbesondere vorgesehen, dass zum Umrechnen zwischen der Anpresskraft Fp (oder dem Anpressdruck Cp) und der Verzögerungskraft Fv (oder dem Verzögerungsmoment Mv) der hinterlegte nominale Reibwert mue.nom verwendet wird, oder der vorher bzw. aktuell berechnete Reibwert mue.ber, wenn der berechnete Reibwert mue.ber niedriger liegt als der nominale Reibwert mue.nom.

Auch bei dem erfindungsgemäßen Bremsaktor wird im Not- oder Schnellbremsfall in hier nicht gezeigter Weise, die in der Druckschrift WO 2012/126946 A2 ausführlich beschrieben ist, mittels einer Überwachungsfunktion auf eine ungeregelte passive Rückfallebene umgeschaltet.

Bei dem erfindungsgemäßen Bremsaktor wird jedoch - im Gegensatz zu dem aus der Druckschrift WO 2012/126946 A2 bekannten Bremsaktor - im Schnellbremsfall nicht auf die ungeregelte passive Rückfallebene umgeschaltet, wenn sich das Schienefahrzeug im Stillstand befindet. Vielmehr wird in diesem Fall eine geregelte Bremsung aufrecht erhalten, wobei eine Regelung der Anpressgröße erfolgt. Somit kann beim Einsatz des erfindungsgemäßen Bremsaktors ein unnötig häufiges Einfallen der Rückfallebene und damit ein Herabsetzen der Verfügbarkeit des Bremssystems vermieden werden.

Mit dem erfindungsgemäßen Bremsaktor kann bei Bremsvorgängen mit Betriebsbedingungen, in denen eine Regelung der Verzögerungsgröße nicht sinnvoll ist, oder auch bei erkennbaren Fehlern oder Unplausibilitäten bei der Messung der Verzögerungsgröße eine geregelte Bremsung aufrecht erhalten und die Bremsanforderung (der Bremsbefehl) geregelt bedient werden.

**Patentansprüche**

1. Bremsaktor (BA) für ein Bremssystem (B) eines Fahrzeugs, insbesondere eines Schienenfahrzeugs (S),

   - mit einer Sollwertregelungseinrichtung (5), die zumindest einen Sollwert (Sv) einer Verzögerungsgröße (Fv; Mv) auf einen Ausgangs-Sollwert (AS) regelt,
   - mit einer Sollwert-Kraft-Umsetzungseinrichtung (6), die den Ausgangs-Sollwert (AS) in einen Istwert (Ip) einer Anpressgröße (Cp; Fp) umsetzt, und
   - mit Bremsmitteln (9, 10, 11), die den Istwert (Ip) der Anpressgröße (Cp; Fp) zum Abbremsen des Fahrzeugs in einen Istwert (Iv) der Verzögerungsgröße (Fv; Mv) umsetzen,
   - bei dem ein Sensor (7), den Istwert (Ip) der Anpressgröße (Cp; Fp) ermittelt,
   - bei dem ein weiterer Sensor (8), den Istwert (Iv) der Verzögerungsgröße (Fv; Mv) ermittelt,
   - bei dem die Sollwertregelungseinrichtung (5) geeignet ausgebildet ist, bei vorbestimmten Betriebsbedingungen des Fahrzeugs zur Regelung der Verzögerungsgröße (Fv; Mv) den Ausgangs-Sollwert (AS) so einzustellen, dass der erfasste Istwert (Iv) der Verzögerungsgröße (Fv; Mv) dem zumindest einen Sollwert (Sv) der Verzögerungsgröße (Fv; Mv) entspricht, und
   - bei dem die Sollwertregelungseinrichtung (5) geeignet ausgebildet ist, bei weiteren vorbestimmten Betriebsbedingungen des Fahrzeugs zur Regelung der Anpressgröße (Cp; Fp) den Ausgangs-Sollwert (AS) so einzustellen, dass der erfasste Istwert (Ip) der Anpressgröße (Cp; Fp) einem Sollwert (Sp) der Anpressgröße (Cp; Fp) entspricht,

   **gekennzeichnet durch**

   - eine Überwachungseinrichtung (3), die geeignet ausgebildet ist, bei den vorbestimmten Betriebsbedingungen einen ersten Wert (US.1) eines Umschaltsignals (US) und bei den weiteren Betriebsbedingungen einen zweiten Wert (US.2) des Umschaltsignals (US) zu erzeugen,
   - wobei die Sollwertregelungseinrichtung (5) geeignet ausgebildet ist, unter der Einwirkung des ersten Wertes (US.1) des Umschaltsignals (US) selbsttätig zur Regelung der Verzögerungsgröße (Fv; Mv) und unter der Einwirkung des zweiten Wertes (US.2) des Umschaltsignals (US) selbsttätig zur Regelung der Anpressgröße (Cp; Fp) umzuschalten, und
   - wobei die Überwachungseinrichtung (3) geeignet ausgebildet ist, den zweiten Wert (US.2) des Umschaltsignals (US) beim Gleiten des Fahrzeuges an einem Ausgang (A3.1) bereit zu stellen.

2. Bremsaktor (BA) nach Anspruch 1, **dadurch gekennzeichnet, dass** als Anpressgröße ein Anpressdruck (Cp) oder eine Anpresskraft (Fp) und als Verzögerungsgröße eine Verzögerungskraft (Fv) oder ein Verzögerungsmoment (Mv) dient.

3. Bremsaktor (BA) nach einem der Ansprüche 1 oder 2, **dadurch gekennzeichnet, dass** der Sollwert (Sp) der Anpressgröße (Cp; Fp) unabhängig von dem Sollwert (Sv) der Verzögerungsgröße (Fv; Mv) vorgegeben oder anhand des Sollwertes (Sv) der Verzögerungsgröße (Fv; Mv) berechnet ist.

4. Bremsaktor (BA) nach Anspruch 3, **gekennzeichnet durch** eine Umrechnungseinrichtung (4), die geeignet ausgebildet ist,

   - anhand geometrischer Verhältnisse der Sollwert-Kraft-Umsetzungseinrichtung (6) und der Bremsmittel (9, 10, 11) sowie anhand der beiden Istwerte (Ip, Iv) einen Reibwert (mue.ber) zu berechnen,

- einen nominalen Reibwert (mue.nom) anzufordern oder zu hinterlegen und
- den Sollwert (Sp) der Anpressgröße (Cp; Fp) zu berechnen,
- wobei die Berechnung des Sollwert (Sp) der Anpressgröße (Cp; Fp) anhand des Sollwertes (Sv) der Verzögerungsgröße (Fv; Mv) sowie anhand eines ausgewählten Reibwertes (mue.i) nach folgendem Zusammenhang erfolgt:

$$Sp = Sv \ / \ mue.i$$

mit mue.i = mue.nom wenn mue.nom < mue.ber sonst mue.i = mue.ber.

5. Bremsaktor (BA) nach Anspruch 4,
**dadurch gekennzeichnet, dass** der berechnete Reibwert (mue.ber) ein Momentanreibwert oder ein mittlerer Reibwert des aktuellen Bremsvorganges oder ein mittlerer Reibwert eines vorhergehenden Bremsvorganges ist.

6. Bremssystem (B) zum Bremsen eines Fahrzeugs, insbesondere eines Schienenfahrzeugs(S),
**gekennzeichnet durch**
zumindest einen Bremsaktor (BA) nach einem der Ansprüche 1 bis 5.

7. Bremssystem (B) nach Anspruch 6,
**dadurch gekennzeichnet, dass** der zumindest eine Bremsaktor (BA) in seiner Gesamtheit zur Montage an einem Drehgestell (DG) des Schienenfahrzeugs (S) eingerichtet ist.

8. Fahrzeug, insbesondere Schienenfahrzeug (S),
**gekennzeichnet durch**
ein Bremssystem (B) nach einem der Ansprüche 6 oder 7.

**Claims**

1. Brake actuator (BA) for a brake system (B) of a vehicle, in particular a rail vehicle (S),

 - with a setpoint value control device (5) which regulates at least one setpoint value (Sv) of a deceleration variable (Fv; Mv) to an output setpoint value (AS),
 - with a setpoint power conversion device (6) which converts the output setpoint value (AS) into an actual value (Ip) of a contact variable (Cp; Fp), and
 - with braking means (9, 10, 11) which convert the actual value (Ip) of the contact variable (Cp; Fp) for braking the vehicle into an actual value (Iv) of the deceleration variable (Fv; Mv),
 - in which a sensor (7) determines the actual value (Ip) of the contact variable (Cp; Fp);
 - in which a further sensor (8) determines the actual value (Iv) of the deceleration variable (Fv; Mv) and
 - in which the setpoint value control device (5) is suitably designed to set the output setpoint value (AS) in predetermined operating conditions of the vehicle to control the deceleration variable (Fv; Mv), such that the detected actual value (Iv) of the deceleration variable (Fv; Mv) corresponds to the at least one setpoint value (Sv) of the deceleration variable (Fv; Mv), and
 - in which the setpoint control device (5) is suitably designed to set the output setpoint value (AS) in further predetermined operating conditions of the vehicle to control the contact variable (Cp; Fp), such that the detected actual value (Ip) of the contact variable (Cp; Fp) corresponds to a setpoint value (SP) of the contact variable (Cp; Fp),

**characterised by**

 - a monitoring device (3) which is suitably designed to generate a first value (US.1) of a switching signal (US) in the predetermined operating conditions, and to generate a second value (US.2) of the switching signal (US) in the further operating conditions,
 - wherein the setpoint value control device (5) is suitably designed, under the action of the first value (US.1) of the switching signal (US), to automatically switch to control of the deceleration variable (Fv; Mv) and, under the action of the second value (US.2) of the switching signal (US), to automatically switch to control of the contact variable (Cp; Fp),
 - wherein the monitoring device (3) is suitably designed to provide the second value (US.2) of the switching signal (US) at an output (A3.1) when the vehicle is slipping.

2. Brake actuator (BA) according to claim 1,
**characterised in that**
a contact pressure (Cp) or a contact force (Fp) serves as the contact variable and a deceleration force (Fv) or a deceleration torque (Mv) serves as the deceleration variable.

3. Brake actuator (BA) according to one of claims 1 or 2,
**characterised in that**
the setpoint value (Sp) of the contact variable (Cp, Fp) is predetermined independently of the setpoint value (Sv) of the deceleration variable (Fv; Mv) or is calculated on the basis of the setpoint value (Sv) of the deceleration variable (Fv; Mv).

4. Brake actuator (BA) according to claim 3, **characterised by** a conversion device (4) which is suitably designed

   - to calculate a coefficient of friction (mue.ber) on the basis of geometric ratios of the setpoint force conversion device (6) and of the braking means (9, 10, 11) and on the basis of the two actual values (Ip, Iv),
   - to request or store a nominal coefficient of friction (mue.nom) and
   - to calculate the setpoint value (Sp) of the contact variable (Cp; Fp),
   - wherein the calculation of the setpoint value (Sp) of the contact variable (Cp; Fp) takes place on the basis of the setpoint value (Sv) of the deceleration variable (Fv; Mv) and on the basis of a selected coefficient of friction (mue.i) according to the following relationship:

$$Sp = Sv / mue.i$$

   where mue.i = mue.nom if mue.nom < mue.ber otherwise mue.i = mue.ber.

5. Brake actuator (BA) according to claim 4, **characterised in that** the calculated coefficient of friction (mue.ber) is a torque coefficient of friction or an average coefficient of friction of the current braking operation or an average coefficient of friction of a preceding braking operation.

6. Braking system (B) for braking a vehicle, in particular a rail vehicle (S), **characterised by** at least one brake actuator (BA) according to one of claims 1 to 5.

7. Braking system (B) according to claim 6, **characterised in that** the at least one brake actuator (BA) is set up in its entirety for mounting on a bogie (DG) of the rail vehicle (S) .

8. Vehicle, in particular rail vehicle (S), **characterised by** a brake system (B) according to one of claims 6 or 7.

**Revendications**

1. Actionneur (BA) de frein pour un système (B) de freinage d'un véhicule, notamment d'un véhicule (S) ferroviaire,

   - comprenant un dispositif (5) de régulation d'une valeur de consigne, qui régule au moins une valeur (Sv) de consigne d'une grandeur (Fv ; Mv) de décélération à une valeur (AS) de consigne initiale,
   - comprenant un dispositif (6) de conversion de force de valeur de consigne, qui transforme la valeur (As) de consigne initiale en une valeur (Ip) réelle d'une grandeur (Cp ; Fp) de serrage, et
   - comprenant des moyens (9, 10, 11) de freinage, qui transforment la valeur (Ip) réelle de la grandeur (Cp ; Fp) de serrage pour freiner le véhicule en une valeur (Iv) réelle de la grandeur (Fv ; Mv) de décélération,
   - dans lequel un capteur (7) détermine la valeur (Ip) réelle de la grandeur (Cp ; Fp) de serrage,
   - dans lequel un autre capteur (8) détermine la valeur (Iv) réelle de la grandeur (Fv ; Mv) de décélération,
   - dans lequel le dispositif (5) de régulation d'une valeur de consigne est constitué de manière appropriée pour, dans des conditions de fonctionnement déterminées à l'avance du véhicule, régler la valeur (AS) de consigne initiale pour la régulation de la grandeur (Fv ; Mv) de décélération de manière à ce que la valeur (Iv) réelle détectée de la grandeur (Fv ; Mv) de décélération corresponde à la au moins une valeur (Sv) de consigne de la grandeur (Fv ; Mv) de décélération, et
   - dans lequel le dispositif (5) de régulation d'une valeur de consigne est constitué de manière appropriée pour, dans d'autres conditions de fonctionnement déterminées à l'avance du véhicule, régler la valeur (As) de consigne initiale pour la régulation de la grandeur (Cp ; Fb) de serrage de manière à ce que la valeur (Ip) réelle détectée de la grandeur (Cp ; Fb) de serrage corresponde à une valeur (Sp) de consigne de la grandeur (Cp ; Fb) de serrage,

**caractérisé par**
un dispositif (3) de contrôle, qui est constitué de manière appropriée pour, dans les conditions de fonctionnement déterminées à l'avance, produire une première valeur (US.1) d'un signal (US) d'inversion et, dans les autres conditions de fonctionnement, une deuxième valeur (US.2) du signal (US) d'inversion,
dans lequel le dispositif (5) de régulation d'une valeur de consigne est constitué de manière appropriée pour, sous l'effet de la première valeur (US-1) du signal (US) d'inversion, s'inverser automatiquement pour la régulation de la grandeur (Fv ; Mv) de décélération et, sous l'effet de la deuxième valeur (US-2) du signal (US) d'inversion, s'inverser automatiquement pour la régulation de la grandeur (Cp ; Fp) de serrage et

- dans lequel le dispositif (3) de contrôle est constitué de manière appropriée pour mettre à disposition d'une sortie (A3.1) la deuxième valeur (US.2) du signal (US) d'inversion lorsque le véhicule glisse.

2. Actionneur (BA) de frein suivant la revendication 1, **caractérisé en ce que** sert, de grandeur de serrage, une pression (Cp) de serrage ou une force (Fp) de serrage et, de grandeur de décélération, une force (Fv) de décélération ou un couple (Mv) de décélération.

3. Actionneur (BA) de frein suivant l'une des revendications 1 ou 2, **caractérisé en ce que** la valeur (Sp) de consigne de la grandeur (Cp ; Fp) de serrage est donnée à l'avance indépendamment de la valeur (Sv) de consigne de la grandeur (Fv ; Mv) de décélération ou est calculée à l'aide de la valeur (Sv) de consigne de la grandeur (Fv ; Mv) de décélération.

4. Actionneur (BA) de frein suivant la revendication 3, **caractérisé par** un dispositif (4) de transformation par le calcul, qui est constitué de manière appropriée

- pour, à l'aide des conditions géométriques du dispositif (6) de conversion valeur de consigne-force et des moyens (9, 10, 11) de freinage, ainsi qu'à l'aide des deux valeurs (Ip, Iv) réelles, calculer un coefficient (mue.ber) de frottement,
- demander ou mémoriser un coefficient (mue.nom) de frottement nominal, et
- calculer la valeur (Sp) de consigne de la grandeur (Cp ; Fp) de serrage,
- dans lequel le calcul de la valeur (Sp) de consigne de la grandeur (Cp ; Fp) de serrage s'effectue à l'aide de la valeur (Sv) de consigne de la grandeur (Fv ; Mv) de décélération, ainsi qu'à l'aide d'un coefficent (mue.i) de frottement sélectionné selon la relation suivante :

$$Sp = Sv / mue.i$$

avec mue.i = mue.nom si mue.nom < mue.ber sinon mue.i = mue.ber.

5. Actionneur (BA) de frein suivant la revendication 4, **caractérisé en ce que** le coefficient (mue.ber) de frottement calculé est une coefficient de frottement instantané ou un coefficient de frottement moyen de l'opération de freinage présente ou un coefficient de frottement moyen d'une opération de freinage précédente.

6. Système (B) de freinage pour freiner un véhicule, notamment un véhicule (S) ferroviaire, **caractérisé par** au moins un actionneur (BA) de frein suivant l'une des revendications 1 à 5.

7. Système (B) de freinage suivant la revendication 6, **caractérisé en ce que** le au moins un actionneur (BA) de frein est conçu en son entier pour le montage sur un boggie (DG) du véhicule (S) ferroviaire.

8. Véhicule, notamment véhicule(S) ferroviaire, **caractérisé par** un système (B) de freinage suivant l'une des revendications 6 ou 7.

FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012126946 A2
- DE 10132834 A1
- EP 0276435 A2